# EUROPEAN PATENT SPECIFICATION

(11) **EP 3 010 671 B1**
(45) Date of publication and mention of the grant of the patent: **11.12.2024**
(21) Application number: 14726385.9
(22) Date of filing: 27.05.2014
(51) Int. Cl.: B22F 10/38, B23P 6/00, B22F 10/32, B22F 10/28, C22C 1/10, B22F 10/64, C22C 1/04, C22C 19/03, B22F 5/00, B22F 3/11, B22F 10/36, B23K 35/02, C22F 1/10, C22C 19/05, B33Y 10/00, F01D 25/00, B22F 10/366, B33Y 80/00

(54) **METHOD FOR PRODUCING A THREE-DIMENSIONAL ARTICLE**
VERFAHREN ZUR HERSTELLUNG EINES DREIDIMENSIONALEN ARTIKELS
PROCÉDÉ DE PRODUCTION D'UN ARTICLE EN TROIS DIMENSIONS

(30) Priority: 18.06.2013 EP 13172553
(43) Date of publication of application: 27.04.2016
(73) Proprietor: Ansaldo Energia IP UK Limited, London W1G 9DQ (GB)
(72) Inventor: ENGELI, Roman, CH-8050 Zürich (CH); HOEVEL, Simone, CH-5426 Lengnau (CH); STANKOWSKI, Alexander, CH-5303 Wuerenlingen (CH); ETTER, Thomas, CH-5037 Muhen (CH); HAEHNLE, Hartmut, 79790 Küssaberg (DE)
(74) Representative: Studio Torta S.p.A.
(86) International application number: PCT/EP2014/060952
(87) International publication number: WO 2014/202352

(56) References cited:
- EP-A1- 1 396 556
- EP-A1- 2 402 096
- EP-A1- 2 586 548
- EP-A1- 2 589 449
- WO-A1-2013/087515
- US-A1- 2007 272 053
- JONAS SAARIMÄKI: "The mechanical properties of lattice truss structures with load- bearing shells made of selectively laser melted Hastelloy X(TM)", 1 July 2011 (2011-07-01), XP055528421, Retrieved from the Internet <URL:http://www.diva-portal.org/smash/get/diva2:457192/FULLTEXT01.pdf> [retrieved on 20181129]

## Description

### BACKGROUND OF THE INVENTION

The present invention relates to the technology of producing a three-dimensional article by means of selective laser melting (SLM). It refers to a method for producing an article or at least a part of such an article made of a gamma prime (γ') precipitation hardened nickel base superalloy with a high volume fraction (>25 %) of gamma-prima phase or of a non-castable or difficult to machine material and to an article made with said method. The method relates to producing of new or repairing of used and damaged turbine blade crown.

### PRIOR ART

Gas turbine components, such as turbine blades, often have complex three-dimensional geometries that may have difficult fabrication and repair issues.

The build-up of material on ex-service turbine components, for example during reconditioning, is usually done by conventional build-up welding such as tungsten inert gas (TIG) welding or laser metal forming (LMF). The use of these techniques is limited to materials with acceptable weldability such as for solution-strengthened (e.g. IN625, Heynes230) or gamma-prime strengthened nickel-base superalloys with low to medium amount of Al and Ti (e.g. Haynes282). Nickel-base superalloys with high oxidation resistance and high gamma-prime content (>25 Vol.-%), that means with a high combined amount of at least 5 wt.- % Al and Ti, such as IN738LC, MarM-247 or CM-247LC are typically difficult to weld and cannot be processed by conventional build-up welding without considerable micro-cracking. The gamma-prime phase has an ordered FCC structure of the L12 type and form coherent precipitates with low surface energy. Due to the coherent interface and the ordered structure, these precipitates are efficient obstructions for dislocation movement and strongly improve the strength of the material even at high temperature. The low surface energy results in a low driving force for growth which is the reason for their long-term high temperature stability. In addition to the formation of gamma-prime phase, the high Al content results in the formation of a stable surface oxide layer resulting in superior high temperature oxidation resistance. Due to the extraordinary high temperature strength and oxidation resistance, these materials are preferably used in highly stressed turbine components. Typical examples of such gamma-prime strengthened nickel-base superalloys are: Mar-M247, CM-247LC, IN100, In738LC, IN792, Mar-M200, B1900, Rene80 and other derivatives

With conventional build-up welding techniques, for example TIG or LMF these gamma-prime strengthened superalloys can hardly be processed without considerable formation of microcracks.

Different cracking mechanism have been identified in the literature: Cracking can occur during the final stage of solidification, where dendrite formation inhibits the backfilling of liquid, resulting in crack initiation in the isolated sections. This mechanism is called "solidification cracking" (SC). So-called "Liquation cracking" (LC) occurs when dissolution of precipitates in the heat affected zone is retarded due to the fast heat-up during welding. As a result, the precipitates still exist at temperatures where they are not thermodynamically stable and an eutectic composition is formed at the interface region. When the temperature exceeds the relatively low eutectic temperature this interface regions melts and wets the grain boundaries. These weakened grain boundaries cannot anymore accommodate the thermal stresses, resulting in crack formation. Cracking can also occur in the solid state when previously processed layers are reheated to a temperature at which precipitations can form. The precipitation results in stress formation due to volumetric changes, in increased strength and in loss of ductility. Combined with the superimposed thermal stresses, the rupture strength of the material can be locally exceeded and cracking occurs. This mechanism is referred to as "strainage cracking" (SAC).

Due to the high fraction of precipitates and the resulting high mechanical strength, the ability to relax thermal stresses is strongly reduced. For this reason gamma-prime precipitation hardened superalloys are especially prone to these cracking mechanisms and very difficult to weld.

Another issue is that state-of-the-art reconditioning processes often take a long time due to the many process steps involved. In the repair of turbine blades for example, crown plate replacement, tip replacement and/or coupon repair require different process steps. This results in high costs and long lead times.

The efficiency of a gas turbine increases with increasing service temperature. As the temperature capability of the used materials is limited, cooling systems are incorporated into turbine components. Different cooling techniques exist such as film cooling, effusion cooling or transpiration cooling. However, the complexity of the cooling system is limited by the fabrication process. State-of-the-art turbine components are designed with respect to these limited fabrication processes, which impede in most cases the optimal technical solution. Transpiration cooling has currently limited applications, as those porous structure have problems coping with the mechanical and thermal stresses.

Another drawback of conventional turbine blades is that they require the extraction of the cast core and must therefore have an open crown tip. The crown tip must subsequently be closed by letter box brazing, which is an additional critical step during fabrication. Additionally to these geometric restrictions, the state-of-the-art fabrication processes are often limited in the material choice and require castable or weldable material.

It is also known state of the art that abradable coatings or honeycombs are added on vanes and heat shields in order to avoid gas leakage which would result in decreased efficiency. The turbine blade tip cuts into this abradable structure during the running-in process, which results in a good sealing. However, due to the high abrasive effect of the turbine blade tip, the abradable layer is often strongly damaged during this process and therefore often requires complete replacement after each service interval. Due to limited material choice, oxidative losses of tip is a further common problem.

Selective laser melting (SLM) for the direct build-up of material on new or to be repaired/reconditioned turbine components has several advantages and can overcome the shortcomings mentioned above.

Due to the extremely localized melting and the resulting very fast solidification during SLM, segregation of alloying elements and formation of precipitates is considerably reduced. This results in a decreased sensitivity for cracking compared to conventional build-up welding techniques. In contrast to other state-of-the-art techniques, SLM allows the near-net shape processing of non-castable, difficult to machine or difficult to weld materials such as high Al+Ti containing alloys (eg. IN738LC). The use of such high temperature strength and oxidation resistant materials significantly improves the properties of the built-up turbine blade section.

Porosity is a known phenomenon in the field of additive manufacturing, such as SLM. Apart from medical applications, the appearance of porosity is an effect that has to be minimized because porosity affects material properties such as strength, hardness and surface quality negatively. The SLM process parameters are therefore usually, especially for gas turbine components, optimized for highest density. Residual porosity is considered detrimental and therefore unwanted.

In contrast to casting and conventional repair techniques (e.g. build-up welding), SLM offers a much higher design freedom and allows the production of very complex structures ("complexity for free"). In addition, the use of SLM can reduce the amount of process steps, by combination of different repair processes in one single process.

In document WO 2009/156316 A1 a method for producing a component with coating areas by means of selective laser melting is disclosed. The coating areas have a composition that differs from the composition of the substrate material. This is accomplished by intermittently introducing a reactive gas that reacts with the powder material during SLM process. Therefore, during production of the component, layer regions arise, which can ensure particular functions of the component, for example a hardened surface.

Document EP 2319641 A1 describes a method to apply multiple materials with a selective laser melting process which proposes the use of foils/tapes/sheets or three-dimensional reforms instead of different powder for a second and additional material different from the previous (powder based) to be applied. These foils, tapes, sheets or preforms can be applied on different sections / portions of three-dimensional articles, for example on edges with abrasive materials, or on surfaces to improve the heat transfer, so that an adjustment of the microstructure/chemical composition with respect to the desired properties of the component/article can be achieved.

Document US2008/0182017 A1 discloses a method for laser net shape manufacturing a part or repairing an area of a part by deposition a bead of a material, wherein the deposited material may be varied or changed during the deposition such that the bead of material is formed of different materials.

Document EP 2586548 A1 describes a method for manufacturing a component or a coupon by means of selective laser melting SLM with an aligned grain size distribution dependent on the distribution of the expected temperature and/or stress and /or strain of the component during service/operation such that the lifetime of the component is improved with respect to a similar component with substantially uniform grain size.

EP2589449 relates to a process for the production by selective laser melting (SLM) of crack-free and dense three-dimensional articles made of a gamma-prime precipitation-strengthened nickel-base superalloy, comprising more than 6 wt.- % of [2 Al (wt. -%) + Ti (wt. -%)].

WO2013087515 relates to a method for additively manufacturing an article made of a difficult-to-weld highly-precipitation-strengthened Ni-base super alloy that comprises Al and Ti in the sum of more than 5 wt. -%.

XP055528421 is a disclosure referring to Siemens gas turbines made by selective laser melting.

EP2402096 relates to a porous structure comprising beam-shaped elements, which consist of linearly passing beam-shaped elements and curved beam-shaped elements. Contrary to the invention, EP2402096 does not refer to a turbine blade crown comprising a dense inner layer including cooling channels.

### SUMMARY OF THE INVENTION

The invention is set out in the appended set of claims.

### BRIEF DESCRIPTION OF THE DRAWINGS

The present invention is now to be explained more closely by means of different embodiments and with reference to the attached drawings.
- Fig. 1: shows as a first embodiment a blade tip with the blade crown and an opposite arranged abradable (heat shield, SLM generated with tailored porosity);
- Fig. 2: shows the part from Fig. 1 after running in process;
- Fig. 3: shows a metallographic cut of a IN738LC test specimen treated according to the disclosed method showing a high porosity after SLM;
- Fig. 4: shows a metallographic cut of a IN738LC test specimen treated according to the disclosed method showing a medium porosity after SLM;
- Fig. 5, 6: show as two additional embodiments of the invention a cut through a wall, for example a blade tip, with different layers and cooling channels for efussion/transpiration cooling;
- Fig. 7: shows a similar embodiment for a turbine blade with a dense area and an open-porous built-up blade crown;
- Fig. 8: shows an additional embodiment analog to Fig. 7, but with ribs in the open-porous structure; not part of the presently claimed invention ;
- Fig. 9: shows an additional embodiment analog to Fig. 6, but with ribs in the open-porous structure after production of the blade (short service time of the blade); not part of the presently claimed invention;
- Fig.10: shows the embodiment according to Fig. 9 after a long service time of the gas turbine with damaged areas 15; not part of the presently claimed invention;
- Fig. 11: shows two embodiments of the inventions for a modified turbine blade and a modified compressor blade with a modified cross section of the airfoil; not part of the presently claimed invention;
- Fig. 12: shows details of Fig. 11 and
- Fig. 13, 14: show cross sections of the blade according to Fig. 12 at different length of the airfoil 16' as indicated in Fig. 12; not part of the presently claimed invention.

### DETAILED DESCRIPTION OF DIFFERENT EMBODIMENTS

### First embodiment:

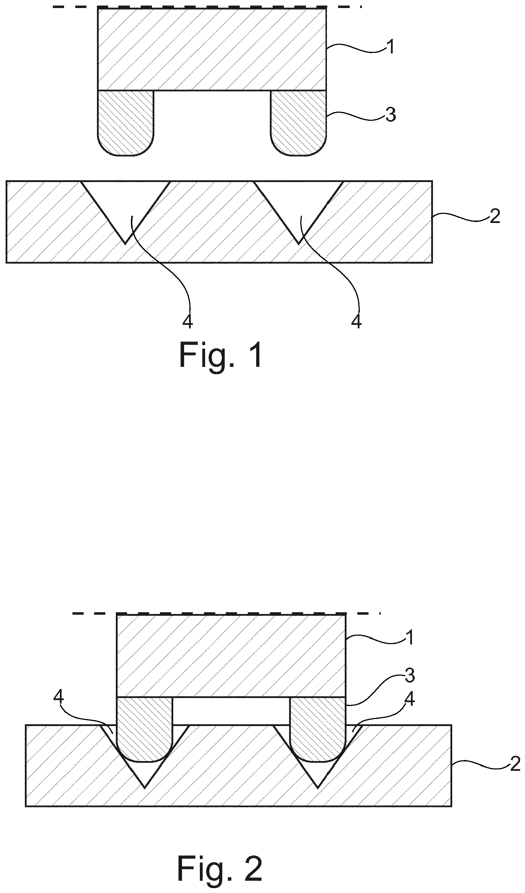

The invention is a build-up of a blade crown 3 of a gas turbine blade tip 1 and heat shield 2 by SLM with selectively adjusted pore structure 4 to reduce wear by the resulting decreased abrasivity. Fig. 1 and Fig. 2 demonstrate this first embodiment of the invention, Fig. 2 shows the optimal sealing even after running in process with minimized damage of the bade tip 1 and the heat shield 2.

To get high efficiency, the gas leak between the blade tip 1 and the heat shield 2 must be minimized (see Fig. 1). A good sealing is commonly achieved by a grind in process of the turbine blade during heat-up, caused by thermal expansion. Generally, the blade crown 3 is designed as abrasive component, which runs into heat shield 2 designed as abradable. Thermal cycles during service result in a varying distance between the blade tip 1 and the shroud 2. The blade tip 1 can occasionally touch the shroud 2 and the resulting rubbing damages the blade tip 1 and the head shield 2. Increasing the gap width would result in higher leaking and lower efficiency and is not desired.

An optimal design matching of the abradable and the abrasive is required to obtain an effective, long lasting tip sealing. In addition, several other properties such as oxidation resistance need to be considered, which can inhibit optimal abrasive / abradable interaction. Furthermore, limitation in state-of the art fabrication processes also inhibit optimal material selection, escpecially during reconditioning of gas turbine components.

An implementation of this invention is the fabrication of a blade crown 3 with increasing porosity towards the blade tip using selective laser melting. The advantage of this set-up is twofold: By using SLM for the build-up process, materials can be applied which cannot be processed by conventional repair methods. Furthermore, the in-situ generation of secondary phase particles allows an optimal tuning of the wear / abrasion behavior between the abrasive and abradable. This can reduce the excessive damage of the abradable during running-in process.

In another implementation, secondary phase particles are incorporated, which result in a solid-state self-lubrication.

The porosity can be introduced either as designed structure in the 3D CAD model, which is then reproduced during SLM build up or by adjustment of the process parameter (eg. Laser power, Scan velocity, Hatch distance, Layer thickness) in a way that the resulting structure is not completely dense.

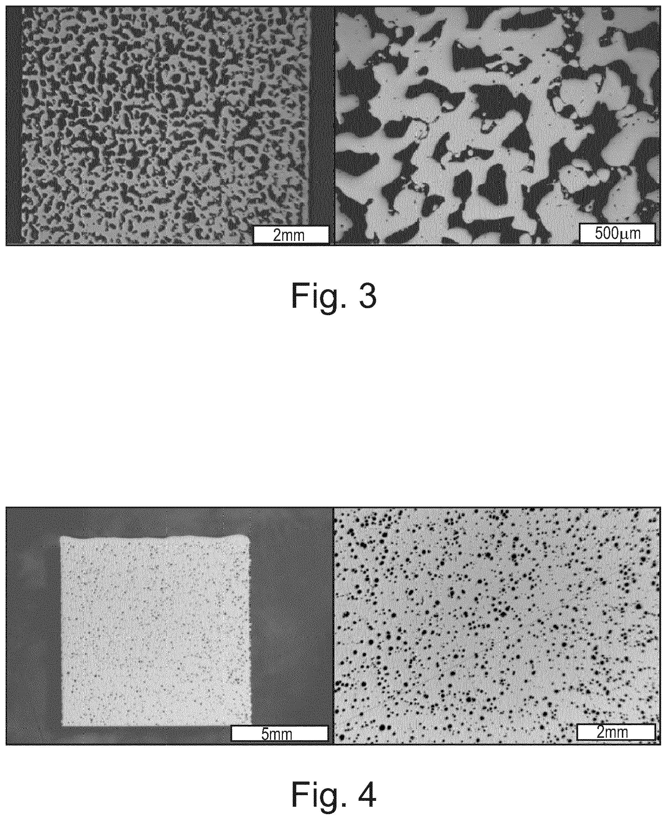

Two examples for porosity generated by process parameter adjustment according to the disclosed method are shown in Fig. 3 and Fig. 4 for the nickel base superalloy IN738LC.

Fig. 3 shows a microstructure with high porosity for the following process parameter:

| | |
|---|---|
| Scan velocity: | 400mm/s |
| Power: | 100W |
| Hatch distance: | 140um |
| Layer thickness: | 30µm |

Fig. 4 shows a microstructure with medium porosity for the following process

| | |
|---|---|
| parameter: | |
| Scan velocity: | 240mm/s |
| Power: | 180W |
| Hatch distance: | 110um |
| Layer thickness: | 30µm |

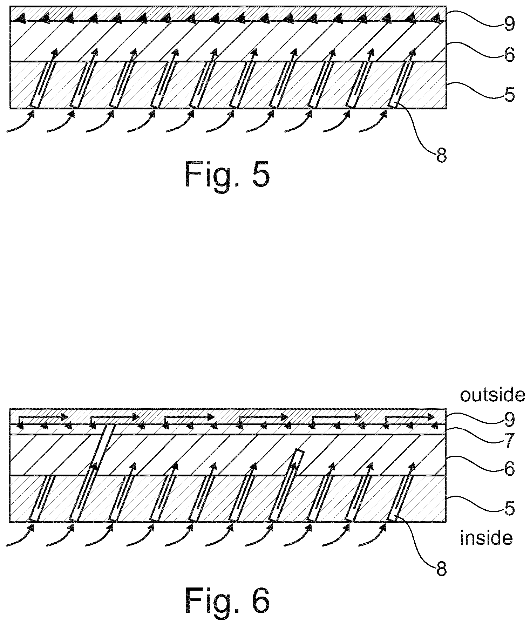

An additional implementation (see Fig. 5) incorporates active effusion / transpiration cooling 9 of the built-up section by incorporation of open porosity in the SLM fabricated turbine section by adjusting the process parameters. The open porous section 6 can either stand alone or being built upon a dense structure 5 to increase the mechanical stability. In the second case (see Fig. 5), the cooling air is supplied to the open porous section 6 by cooling holes 8. The dense section 5 can either be already present (eg. from casting) or be fabricated already incorporating the cooling holes 8 in the same single SLM process together with porous part 6. This allows the easy preparation of combined effusion/transpiration and/or near wall cooling in one single process step.

Different types of such channels 8 can be incorporated in the built-up section. The cooling air is finely distributed in the porous layer and homogenously exits the surface resulting in efficient transpiration cooling of the blade surface. The open-porous structure shows a lower thermal conductivity as when dense, which further reduces the thermal loading of the dense structural layer. An open-porous thermal barrier coating can be applied to the open-porous surface layer in order to further decrease the temperature loading without inhibiting transpiration cooling.

The cooling channels 8 can stop at the interface to the open-porous layer or partly or fully penetrate the open-porous layer. Different types of such channels 8 can be incorporated in the built-up section.

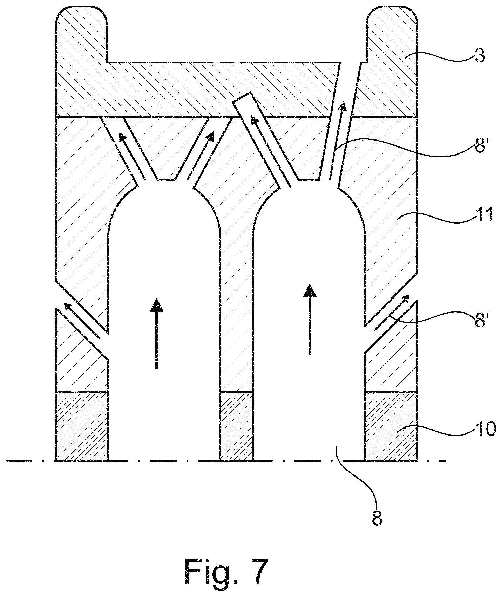

Fig. 7 shows as an example a part of a repaired turbine blade for an ex-service component. The original blade structure 10 with existing cooling holes 8 is covered with a dense, by means of SLM built-up structure 11 with incorporated cooling holes 8, 8' which can extend into the SLM built-up open-porous blade crown 3. The disclosed method avoids the need for letter-box brazing and allows the incorporation of cooling features into the crown with one single process, that means the built up dense structure 11 with incorporated cooling holes /channels 8,8' and the built up open-porous blade crown 3 are built in one single SLM process. This is an important advantage.

In order not to fill existing cooling channels with metal powder, the blade opening is filled with a polymeric substance and an inorganic filler material which is burned out after the SLM process in an subsequent heat treatment step. This procedure allows the continuation of existing cooling channels, respectively the connection of a more complex and sophisticated cooling concept (e.g. transpiration cooling) in the built-up section the air supply in the base component. The design of the built-up section is optimized for the fabrication with the SLM process and avoids sharp edges or big overhanging areas.

In combination with the above-described blade crown an abradable counter-part with selectively tailored porosity can be built up with SLM to reduce wear at the blade tip and optimize the blade tip sealing as for example the a fabrication of a heat shield with increasing porosity towards the heat shield surface at the blade tip contact region using SLM. Thereby, the abradability of the heat shield can be selectively increased at the contact region of the blade tip, without decreasing the materials properties at other locations. With an optimized geometric introduction of the porosity, the wear of the blade tip can be reduced without compromising the sealing behaviour. (see Fig. 1 and Fig. 2).

In another implementation, porosity can be introduced to decrase heat conductivity and thereby increasing insulation properties of the heat shield.

### Second embodiment: (not part of the presently claimed invention)

A second embodiment is transpiration cooling of the turbine blade by a layered structure fabricated by a single additive manufacturing process (see

Fig. 6). The inner layer 5 of the blade wall consists of fully dense material with incorporated cooling channels 8 in order to provide mechanical strength and cooling air supply to second, open-porous layer 6. The air (illustrated with arrows) introduced into the outer, open-porous layer results in transpiration cooling 9 of the outer blade surface resulting in an efficient shielding of the surface from the hot gases. In combination with the reduced thermal conductivity of the porous layer 6, the thermal loading on the inner structural layer is considerably reduced.

If required, an additional open-porous ceramic thermal barrier coating 7 can be applied on the porous metal layer 6 in a second process step to provide an additional, also transpiration cooled thermal barrier.

The cooling channels 8 can stop at the interface to the open-porous layer or partly or fully penetrate the open-porous layer 6, 7. Different types of such channels 8 can be incorporated in the built-up section.

In another embodiment it is also possible to apply an outer dense layer of the base material on the porous metal layer 6.

### Third embodiment: (not part of the presently claimed invention)

This embodiment refers to a separation of porous structures to prevent penetration of hotgas.

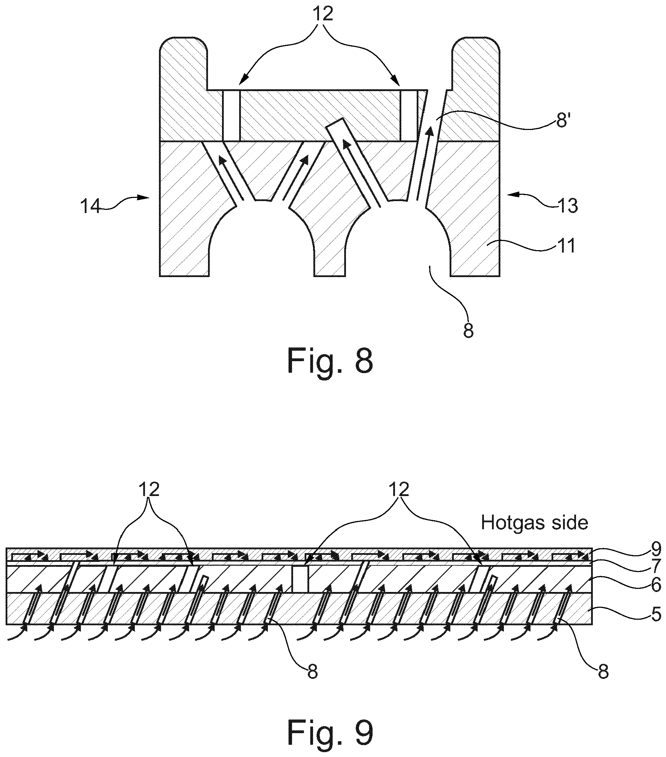

The gas temperature plot along the airfoil illustrates the extend of secondary flows in the hotgas passage. This has an influence on the turbine blade cooling and the material distribution in the blade. Corresponding lines of constant pressure can be shown (not illustrated here). Where such lines are dense the pressure gradients are high. In those areas the open porous structure shall be interrupted by solid ribs 12 which have the effect of a cross-flow barrier to prevent hotgas migration. The ribs 12 separate the suction side 13 from the pressure side 14. This can be seen in Fig. 8, which shows a turbine blade tip analog to Fig. 7.

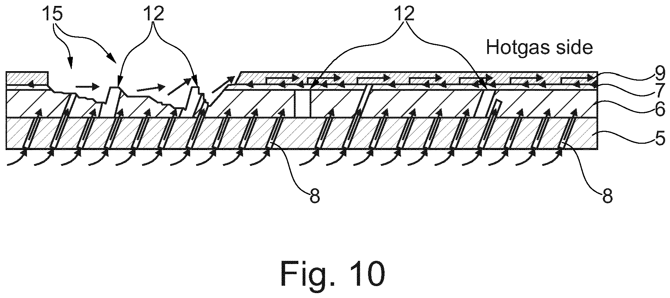

Additional implementations are shown in Fig. 9 and Fig. 10. Fig. 9 is analog to Fig. 6, but with the arrangement of different ribs 12 as cross-flow barriers in the open-porous metal layer 6. Fig. 9 shows the component after manufacturing / short service time with an intact surface, Fig. 10 shows the same component after service with damaged areas 15. Such areas 15 can be oxidation areas or areas of FOD (Foreign Object Damage). The ribs 12 are a barrier in streamwise direction after oxidation and or FOD.

### Fourth embodiment: (not part of the presently claimed invention)

A further embodiment is an airfoil extension with foam-type structures to prevent adding mass.

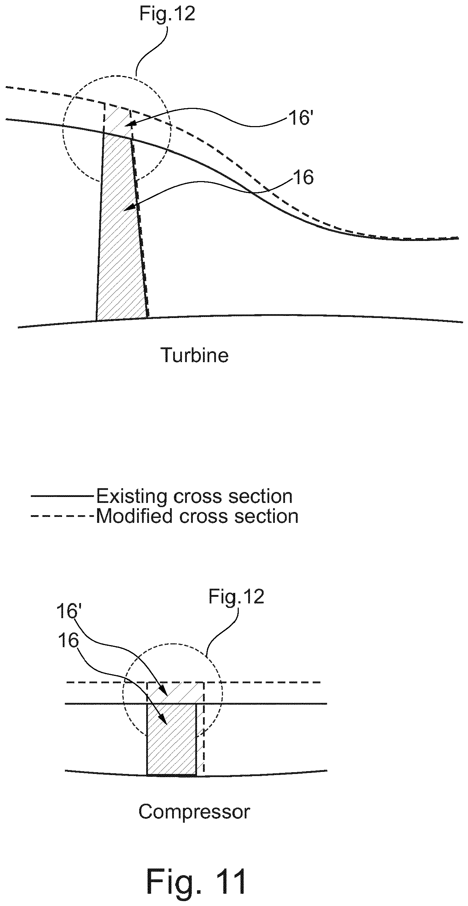

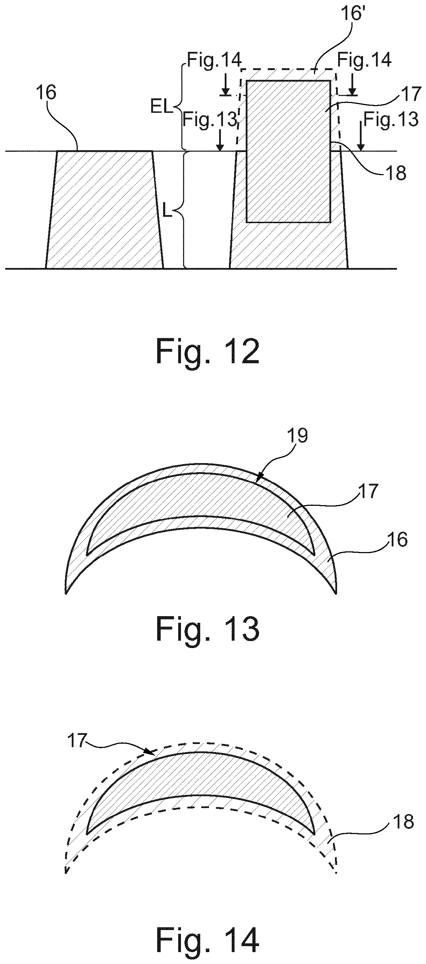

Fig. 11 shows in the left part an airfoil 16,16' of a turbine blade and in the right part an airfoil 16, 16' of a compressor blade with the flow path contours of turbine and compressor, before (continuous line for the existing cross section) and after (dotted line for the modified cross section) increase of flow passage. Such flow passage is done to cope with increased massflow. The pull forces on the rotor are limited and a light-weight extension of the airfoil 16, 16' might be required. 16 is the existing airfoil, 16' the modified airfoil. This can be achieved with porous structures described before and applied with a justified SLM process. Details of Fig. 11 are shown in Fig.12, Fig. 13 and Fig. 14.

In the left part of Fig. 12 the airfoil 16 is shown with the original length L, in the right part of Fig.12 the extended airfoil 16' is shown with an extra length EL. A light weight structure core structure 17 compensates the extra length EL. The core structure is here partly embedded with a solid shell structure 18.

Fig. 13 and Fig. 14 are two cross sections at different length of the airfoil 16' as indicated in Fig. 12. Fig. 13 shows the brazed interface 19, which can be with or without a mechanical interlock between the core 17 and the airfoil 16. Fig. 14 illustrates the core light-weight structure 17 and the shell structure 18, which is an additive built-up. There can be 2 pieces with one or more brazed interfaces, the light weight core and coated top layer/layers or the light-weight core and braze sheet and overlay coatings.

## Claims

1. A method for producing a new or repairing a used and damaged turbine blade crown made of a gamma prime (γ') precipitation hardened nickel base superalloy with a volume fraction of more than 25 % of gamma-prima phase, the method comprising the step of:
a) providing a turbine blade comprising a dense inner layer (5) including cooling channels (8) designed for guiding a cooling medium to the open porous outer layer, which cooling channels either end at the interface to the open porous outer layer or partly or fully penetrate the open-porous outer layer;
b) filling with a polymeric substance and an inorganic filler material the cooling channels (8);
c) building upon the dense inner layer (5) an open-porous outer layer (6), wherein the building of the outer layer (6) is performed by selective laser melting of layerwise deposited metal powder with a laser beam;
d) applying a subsequent heat treatment step for further adjustment of the microstructure and for burning out the polymeric substance and an inorganic introduced into the cooling channels (8) before the selective laser melting step of building of the outer layer (6);
e) applying onto the open porous surface a thermal barrier coating layer is onto the open porous outer layer;
wherein the selective laser melting processing parameters are selectively adjusted to locally tailor the microstructure and porosity of the produced article;
wherein the tailored microstructure comprises in-situ generated second phase particles, preferably hard-phase particle or solid lubricants,
which are at least partly generated by supplying during the selective laser melting processing a reactive gas;
wherein during the selective laser melting processing the composition of the reactive gas is actively changed.

2. Method according to claim 1 **characterized in that** the processing parameters to be adjusted are at least one or a combination of laser power, scan velocity, hatch distance, powder shape, powder size distribution, processing atmosphere.

3. Method according to claim 1 **characterized in that** the resulted microstructure and/or porosity of the deposited layers are different.

4. Method according to claim 1 **characterized in that** the resulted microstructure and/or porosity is gradually changing in radial or lateral direction of the article.

5. Method according to claim 1 **characterized in that** the selectively introduced porosity is used to adjust the eigenfrequency or to counterbalance the effect of additionally added material on an component.

6. Method according to claim 1 **characterized in that** Re, Ti, Ni, W, Mo, B are supplied for forming highly lubricous oxides at high temperatures.

7. Method according to claim 1 characterized that elements forming second phase particles are carbide, boride, nitride, oxide or combinations thereof forming elements.

## Patentansprüche

1. Verfahren zur Herstellung eines neuen oder Reparatur eines gebrauchten und beschädigten Laufschaufelkranzes, der aus einer Gamma-Strich(γ')-ausscheidungsgehärteten Superlegierung auf Nickelbasis mit einem Volumenanteil an Gamma-Strich-Phase von höher als 25 % besteht, wobei das Verfahren die folgenden Schritte umfasst:
a) Bereitstellen einer Laufschaufel, die eine dichte innere Schicht (5) umfasst, die Kühlkanäle (8) umfasst, die zum Führen eines Kühlmediums zur offenporigen äußeren Schicht gestaltet sind, wobei die Kühlkanäle entweder an der Grenzfläche zur offenporigen äußeren Schicht enden oder teilweise oder vollständig in die offenporige äußere Schicht eindringen;
b) Füllen der Kühlkanäle (8) mit einem polymeren Stoff und einem anorganischen Füllmaterial;
c) Aufbauen einer offenporigen äußeren Schicht (6) auf der dichten inneren Schicht (5), wobei das Aufbauen der äußeren Schicht (6) durch selektives Laserschmelzen von schichtweise aufgebrachtem Metallpulver mit einem Laserstrahl durchgeführt wird;
d) Anwenden eines darauffolgenden Wärmebehandlungsschritts zur weiteren Anpassung der Mikrostruktur und zum Ausbrennen des polymeren Stoffs und eines anorganischen Materials, die vor dem Schritt des selektiven Laserschmelzens des Aufbauens der äußeren Schicht (6) in die Kühlkanäle (8) eingeführt wurden;
e) Aufbringen einer Wärmedämmbeschichtungsschicht auf die offenporige Oberfläche ist auf die offenporige äußere Schicht;
wobei die Verarbeitungsparameter des selektiven Laserschmelzens selektiv angepasst werden, um die Mikrostruktur und Porosität des hergestellten Artikels lokal spezifisch zu fertigen;
wobei die spezifisch gefertigte Mikrostruktur an Ort und Stelle erzeugte Partikel einer zweiten Phase, vorzugsweise Hartphasenpartikel oder Festschmierstoffe, umfasst, die zumindest teilweise durch Zuführen eines reaktiven Gases während der selektiven Laserschmelzverarbeitung erzeugt werden;
wobei während der selektiven Laserschmelzverarbeitung die Zusammensetzung des reaktiven Gases aktiv geändert wird.

2. Verfahren nach Anspruch 1, **dadurch gekennzeichnet, dass** die anzupassenden Verarbeitungsparameter mindestens eines von Laserleistung, Scan-Geschwindigkeit, Hatch-Abstand, Pulverform, Pulvergrößenverteilung, Verarbeitungsatmosphäre oder eine Kombination davon sind.

3. Verfahren nach Anspruch 1, **dadurch gekennzeichnet, dass** die resultierende Mikrostruktur und/oder Porosität der aufgebrachten Schichten sich unterscheiden.

4. Verfahren nach Anspruch 1, **dadurch gekennzeichnet, dass** die resultierende Mikrostruktur und/oder Porosität sich in der radialen oder seitlichen Richtung des Artikels allmählich ändert bzw. ändern.

5. Verfahren nach Anspruch 1, **dadurch gekennzeichnet, dass** die selektiv eingeführte Porosität zum Anpassen der Eigenfrequenz oder zum Ausbalancieren der Wirkung von zusätzlich hinzugefügtem Material auf einem Bauteil verwendet wird.

6. Verfahren nach Anspruch 1, **dadurch gekennzeichnet, dass** Re, Ti, Ni, W, Mo, B zum Bilden von Oxiden mit hoher Schmierfähigkeit bei hohen Temperaturen zugeführt werden.

7. Verfahren nach Anspruch 1, **dadurch gekennzeichnet, dass** Elemente, die Partikel der zweiten Phase bilden, Carbid, Borid, Nitrid, Oxid oder Kombinationen davon sind, die Elemente bilden.

## Revendications

1. Procédé de production d'une nouvelle couronne d'aube de turbine ou de réparation d'une couronne d'aube de turbine usagée et endommagée en superalliage à base de nickel durci par précipitation gamma prime (γ') avec une fraction volumique de plus de 25 % de phase gamma-prime, le procédé comprenant les étapes consistant à :
a) fournir une aube de turbine comprenant une couche intérieure dense (5) comprenant des canaux de refroidissement (8) conçus pour guider un milieu de refroidissement vers la couche extérieure poreuse ouverte, lesquels canaux de refroidissement se terminent au niveau de l'interface avec la couche extérieure poreuse ouverte ou pénètrent partiellement ou complètement dans la couche extérieure poreuse ouverte ;
b) remplir les canaux de refroidissement (8) avec une substance polymère et un matériau de remplissage inorganique ;
c) construire sur la couche intérieure dense (5) une couche extérieure poreuse ouverte (6), dans laquelle la construction de la couche extérieure (6) est réalisée par fusion sélective au laser de la poudre métallique déposée par couches à l'aide d'un faisceau laser ;
d) appliquer une étape ultérieure de traitement thermique pour un ajustement supplémentaire de la microstructure et pour brûler la substance polymère et un matériau inorganique introduit dans les canaux de refroidissement (8) avant l'étape de fusion sélective au laser de construction de la couche extérieure (6) ;
e) appliquer sur la surface poreuse ouverte une couche de revêtement de barrière thermique sur la couche extérieure poreuse ouverte ;
dans lequel les paramètres de traitement de fusion sélective au laser sont sélectivement ajustés pour adapter localement la microstructure et la porosité de l'article produit ;
dans lequel la microstructure personnalisée comprend des particules de seconde phase générées in situ, de préférence des particules de phase dure ou des lubrifiants solides,
qui sont au moins en partie générées par la fourniture d'un gaz réactif pendant le traitement de fusion sélective au laser ;
dans lequel pendant le traitement de fusion sélective au laser, la composition du gaz réactif est activement modifiée.

2. Procédé selon la revendication 1, **caractérisé en ce que** les paramètres de traitement à ajuster sont au moins un ou une combinaison de la puissance de laser, de la vitesse de balayage, de la distance d'ouverture, de la forme de la poudre, de la distribution de taille de poudre, de l'atmosphère de traitement.

3. Procédé selon la revendication 1, **caractérisé en ce que** la microstructure et/ou la porosité résultante des couches déposées sont différentes.

4. Procédé selon la revendication 1, **caractérisé en ce que** la microstructure et/ou la porosité résultante change progressivement dans une direction radiale ou latérale de l'article.

5. Procédé selon la revendication 1, **caractérisé en ce que** la porosité introduite de manière sélective est utilisée pour ajuster la fréquence propre ou pour contrebalancer l'effet d'un matériau ajouté additionnellement sur un composant.

6. Procédé selon la revendication 1, **caractérisé en ce que** Re, Ti, Ni, W, Mo et B sont fournis pour former des oxydes hautement lubrifiants à des températures élevées.

7. Procédé selon la revendication 1, **caractérisé en ce que** les éléments formant des particules de seconde phase sont des carbures, borures, nitrures, oxydes ou des combinaisons de ceux-ci.
